# EUROPEAN PATENT SPECIFICATION

(11) **EP 3 657 759 B1**
(45) Date of publication and mention of the grant of the patent: **23.06.2021**
(21) Application number: 18207713.1
(22) Date of filing: 22.11.2018
(51) Int. Cl.: H04L 29/08, H04W 4/02, H04W 4/80, H04W 4/44

(54) **TECHNIQUE FOR WIRELESSLY EXCHANGING DATA WITH A VEHICLE**
VERFAHREN ZUM DRAHTLOSEN DATENAUSTAUSCH MIT EINEM FAHRZEUG
TECHNIQUE POUR L'ÉCHANGE SANS FIL DE DONNÉES AVEC UN VÉHICULE

(43) Date of publication of application: 27.05.2020
(73) Proprietor: MAN Truck & Bus SE, 80995 München (DE); VOLKSWAGEN AKTIENGESELLSCHAFT, 38440 Wolfsburg (DE)
(72) Inventor: JORNOD, Guillaume, 10245 Berlin (DE); ALIEIEV, Roman, 39576 Stendal (DE)
(74) Representative: v. Bezold & Partner Patentanwälte - PartG mbB

(56) References cited:
- WO-A1-2016/037045
- US-A1- 2014 010 545

## Description

### Technical Field

The present disclosure generally relates to a technique for wirelessly exchanging data, e.g., large amounts of data, with a vehicle. More specifically, and without limitation, a stationary device for wirelessly exchanging data with a vehicle and a mobile device for wirelessly exchanging data with a stationary device are provided.

### Background

Application examples of large amounts of data (e.g., including applications referred to by the key word "big data" in the field of telecommunications) include monitoring and management of a fleet of vehicles for logistics and constantly monitoring a quality or service state of produced vehicles by a manufacturer. For some fields of transportation, constantly wire-connected vehicles (such as some railways and trolleybuses) or constantly radio-connected vehicles, the transmission of data from the vehicle can be less problematic, since the vehicles are at known or predictable locations or well connected through cost-efficient cellular telecommunications network or industry-specific communications means.

In contrast, road vehicles can reach remote places that are not covered by a cellular telecommunications network. This communication challenge could be conventionally resolved by satellite communication, which leads to a conflict between the large amount of data to be collected and the costs for receiving said data. Even in regions covered by cellular telecommunications networks, cellular radio resources can be scarce, because the cellular radio resources can be occupied by other users, which extensively utilize mobile broadband applications.

An existing technique in the automotive industry collects data from produced vehicles and monitors a fleet (e.g., of trucks) in the case of self-operated vehicles as services. These applications require the transmission of the data from each vehicle to the manufacturer and the operator, respectively. Currently, this transmission benefits from the fact that the data is not time critical, so that the collected information can be stored up to a few years in the vehicle, e.g., in the case of quality monitoring. The data is recorded on a hard disk or flash memory, and manually downloaded at maintenance from each vehicle.

For wireless data communication that is time critical or close to time-critical, such as fleet management and monitoring, two-year-old data is not usable. Moreover, the storage capacity at the vehicle limits either the frequency of data collection or the frequency of data uploads. To overcome these limitations, operators conventionally use a cellular telecommunications network to upload the data collected by the vehicle. As contracts for cellular services vary from one telecommunication operator to another, and from one country to another, a complicated data management is conventionally implemented based on stored network prices and predicted routes of the vehicle. Whilst these complicated algorithms reduce the costs of data acquisition, the costs are still high, the amount of data is limited, and the latency of the data transport is too long for many applications.

Document US 2014/010545 A1 discloses a data expansion system including a set of roadway reflectors configured to provide wireless broadband data services to a mobile terminal. Each reflector includes processing circuitry configured to establish communications between the mobile terminal and a backhaul network, a wireless transceiver configured to transmit and receive data, a power source that converts solar energy into electricity, and a housing configured to contain the processing circuitry, the transceiver, and the power source.

Document WO 2016/037045 A1 discloses a static and/or dynamic resonant induction, wireless power transfer system used for recharging electric vehicles and other electrically powered devices. Transmission is by means of near field magnetic induction between pairs of loop antennas which, together with the effective waveguide below cut-off structure comprised by the vehicle underbody and the ground surface, largely restrict signal propagation to the area in the immediate vicinity of the system antennas.

In sum, existing techniques for collecting data from a large number of vehicles are only applicable to data that can suffer a long delay and rely on the availability of cellular radio links to a data center or backend server of the operator or manufacturer.

### Summary

Accordingly, there is a need for a technology that enables efficiently collecting large amounts of data from a plurality of road vehicles. Alternatively or more specifically, a technique is needed for data exchange that is more demanding in terms of data amount, data rate and/or latency, though not strictly time critical such as safety related applications or low-latency communication.

The invention is defined by the appended independent claims. Further embodiments are defined by the appended dependent claims.

As to a first aspect, a stationary device is provided. The stationary device is located or locatable at or below a surface of a road for wirelessly exchanging data with a vehicle driving on the road. The stationary device comprises a backhaul interface configured to receive mobility information of the vehicle. The stationary device further comprises a scheduler configured to schedule, based on the mobility information, the wireless exchange of at least one data unit (DU) comprising the data. The stationary device further comprises a wireless interface configured to wirelessly exchange the at least one DU with the vehicle as scheduled by the scheduler.

Herein, the backhaul interface may be any interface that is connected or connectable to a data network and/or other backhaul interfaces of other instances of the stationary device. The backhaul interface may comprise or be further connected to a wireless interface, e.g., a radio-relay or point-to-point static wireless link (e.g., a microwave link). The backhaul interface may be also be referred to as a connectivity interface or stationary interface.

Based on the received mobility information, the scheduler may determine and/or control the time for the wireless exchange of the at least one DU. At least in some embodiments, the wireless interface is scheduled for wirelessly exchanging the at least one DU during the time when the vehicle driving on the road passes over the wireless interface in the road.

In same or further embodiments, by arranging the wireless interface in the road, the wireless exchange involves a short distance, which can increase at least one of channel capacity, a signal to noise ratio, a signal to interference ratio and a frequency reuse. Moreover, since each stationary device may be implemented for radio communication with one passing vehicle at a time, the data transport capacity may scale linearly with the number of vehicles on the road.

The wireless exchange of the data may comprise a transmission of the at least one DU to the vehicle and/or a reception of the at least one DU from the vehicle. The wireless exchange may be based on radio waves and/or optical signals. The scheduler may be further configured to prepare the at least one DU to be transmitted to the vehicle.

The data may be indicative of persons and/or cargo carried by the vehicle. Alternatively or in addition, the data may be indicative of a target or a destination of the vehicle.

The vehicle may be a motor vehicle, e.g., an electric vehicle (i.e., an electric drive vehicle). The vehicle may be at least one of a utility vehicle, a truck, a semi-truck, and a bus. The vehicle may be configured to autonomously drive on the road.

The mobility information may comprise, may be indicative of, or may be implicative of, at least one of a current or predicted location of the vehicle (e.g., on or along the road), a current or predicted velocity of the vehicle (e.g., on or along the road), a planned route or an itinerary of the vehicle and a predicted time of the vehicle passing the stationary device. The mobility information may be derived from a navigation unit in the vehicle and/or a control unit autonomously driving the vehicle. For example, the control unit may autonomously drive the vehicle (e.g., including controlling a velocity, an acceleration and/or a throttle of the vehicle and/or a lane on the road or directly the steering) so that the vehicle passes the stationary device at the predicted time.

The backhaul interface may be an interface configured for a stationary, permanent, and/or underground connection. The backhaul interface may be an interface configured for coupling to a wire, e.g., a copper line and/or an optical fiber, and/or radio-relay link. The wire or link may extend below the surface of the road and/or along the road.

The backhaul interface for the reception of the mobility information may be a control interface, e.g., for a control plane of a data network or backhaul network. Alternatively or in addition, the backhaul interface for the reception of the mobility information may also be used for forwarding or receiving the data exchanged with the vehicle, e.g., for a data plane of a data network or backhaul network.

The stationary device may also be referred to as a base station or a ground station.

The wireless interface may be configured for a radio and/or optical communication with the vehicle, e.g., while the vehicle passes over the stationary device. The wireless interface may be an interface configured for a mobile and/or temporary communication. The wireless interface may be configured for a burst-like and/or short-distance radio communication of the at least one DU. Preferably, the wireless interface is configured for short-range communication, e.g., only while the vehicle covers the wireless interface.

The wireless interface may comprise at least one of an oscillator configured for generating a radio frequency for up-conversion and/or down-conversion of a baseband signal, a power amplifierfor amplifying a radio frequency signal, and an antenna, e.g., an antenna array, for transmitting and/or receiving the radio frequency signal.

A lateral dimension of the antenna array (e.g., parallel to the surface of the road) may be greater than a distance between the road and the vehicle (e.g., a distance between the antenna array of the stationary device and an antenna array of a mobile device at the vehicle), which is passing over the stationary device. The small distance of radio propagation, e.g. as compared to a distance between the stationary devices along the road, can suppress inference between the stationary devices and/or allow for the frequency reuse. The antenna array may comprise a plurality of antenna elements, e.g., including antenna elements with mutual orthogonal polarization.

The backhaul interface may further be configured to receive data that is to be wirelessly transmitted to the vehicle in the wireless exchange of the at least one DU. Alternatively or in addition, the backhaul interface may further be configured to forward the data wirelessly received from the vehicle in the wireless exchange of the at least one DU.

The stationary device may receive (e.g., through its backhaul interface) data that is or needs to be transmitted to the vehicle in the step of wirelessly exchanging the at least one DU with the vehicle. Alternatively or in addition, the stationary device may receive data from the vehicle in the step of wirelessly exchanging the at least one DU with the vehicle, which data may be forwarded (e.g., through the backhaul interface). Alternatively or in addition, the data wirelessly received in a first instance of the wireless exchange of the at least one DU with one vehicle may be stored for transmission in a second instance of the wireless exchange of the at least one DU with another vehicle.

The mobility information may be implicative or indicative of at least one of a distance between the stationary device and the vehicle (e.g., a mobile device at the vehicle) and a velocity of the vehicle (e.g., relative to the road or the stationary device).

The scheduler may determine a time (e.g., a radio frame or one or more transmission time intervals, TTIs) for the data exchange based on the mobility information and/or the determined or predicted time when the vehicle passes over the stationary device.

The scheduler may determine, based on the mobility information, at least one of a size of the at least one DU, a number of the at least one DU, a modulation scheme for the at least one DU, a coding scheme for the at least one DU, and a medium access scheme for the wireless exchange of the at least one DU.

The size, the modulation scheme and/or the coding scheme (e.g., a modulation and coding scheme, MCS) may be determined based on the velocity of the vehicle. Since a direction of radio propagation may be substantially perpendicular to the velocity of the vehicle, a radio frequency for the data exchange may be substantially free of a (longitudinal) Doppler shift.

The size may relate to the size of each DU or the at least one DU in combination. Alternatively or in addition, the size may relate to the amount of payload data or user data in the DU.

The medium access scheme may define a mechanism for accessing a shared radio medium, e.g., Carrier Sense Multiple Access with Collision Detection according to IEEE 802.3. Alternatively or in addition, the MCS may be determined based on a weather condition, e.g., a precipitation layer on the surface of the road.

The stationary device may comprise or may be co-located or co-locatable with an inductive charging unit in the road. The inductive charging unit may also be referred to as inductive charging plate, inductive charging pad or inductive charging point. The inductive charging unit may comprise a generator coil configured for inductively charging the vehicle.

The stationary device may further comprise a power supply connected or connectable to a power supply line (also: power-line cable) of the inductive charging unit. Optionally, the backhaul interface may comprise a modem coupled to the power-line cable of the inductive charging unit. The modem may be configured for power-line communication (PLC).

The backhaul interface may be connected (e.g., through the modem and the power-line cable, and/or a microwave link) to a data network, e.g., a backhaul network, a radio access network (RAN) or a core network (CN) of a cellular telecommunications network.

The backhaul interface may be connected to the data network (e.g., the CN) for sending the data received from the vehicle to the data network (e.g., a server in the data network) and/or for receiving the data, which is to be wirelessly transmitted to the vehicle, from the data network (e.g., the CN and/or the server). The backhaul interface may be connected for transferring the data from and/or to the data network, e.g., via the power supply line, or alternatively, via a fiber-optics line or any other communication modem.

The wireless interface and the inductive charging unit may be configured to simultaneously exchange the data and energy, respectively, based on the mobility information. The same mobility information may be indicative of when, and/or may be used to determine when, the vehicle is passing the stationary device for exchanging both the data and the energy.

As to a second aspect, a mobile device is provided. The mobile device is located or locatable in a vehicle for wirelessly exchanging data with a stationary device located at or below a surface of a road while driving on the road. The mobile device may comprise a localization unit configured to provide mobility information of the vehicle to a scheduler. The mobile device may further comprise a radio unit configured to receive scheduling information from the scheduler. The scheduling information may be indicative of at least one data unit (DU) comprising the data. The mobile device may further comprise a wireless interface configured to wirelessly exchange the at least one DU with the stationary device as scheduled according to the scheduling information.

The stationary device may be an embodiment of the first aspect. The second aspect may comprise any feature disclosed in the context of the first aspect, or a feature corresponding thereto, and *vice versa.*

The scheduling information may be indicative of the at least one DU by indicating a scheduling grant or a scheduling assignment for the at least one DU. The scheduling information may be indicative of a radio frame or one or more transmission time intervals (TTS) for receiving or transmitting the at least one DU.

The mobility information may be provided to the stationary device in the road by another stationary device in the road, which is located upstream (i.e., in a direction opposite to the driving direction of the vehicle) relative to the stationary device. The other stationary device may announce the arrival of the vehicle. The mobility information may be based on the mobile inductive charging unit interacting with the stationary inductive charging unit of the other stationary device.

Alternatively or in addition, the mobile information may be based on express location information transmitted from the vehicle to the stationary device, e.g., via a cellular network (e.g., the mobility information is forwarded through the backhaul interface.

The wireless exchange of the data may comprise a transmission of the at least one DU to the stationary device and/or a reception of the at least one DU from the stationary device. The wireless exchange may be based on radio waves and/or optical signals. The scheduling information may comprise a scheduling grant for the transmission and/or a scheduling assignment for the reception.

The radio unit may be further configured to prepare the at least one DU to be transmitted to the stationary device according to the scheduling information.

The mobile device may also be referred to as a mobile station or a wirelessly connected device.

The mobile device may further comprise an inductive charging unit configured to receive energy from an inductive charging unit co-located with the stationary device. The inductive charging unit may be further configured to supply the received energy to a traction battery of the vehicle.

In any aspect, the DU may be a protocol data unit (PDU) or data packet.

The wireless interface of the stationary device (stationary wireless interface) and wireless interface of the mobile device (mobile wireless interface) may implement a communication protocol that is compatible with or an extension of existing communication interfaces between vehicle and charging station, e.g., according to any communication standard described in the document "The German Standardisation Roadmap, Electric Mobility 2020, WG 4 - Standardisation and Certification". Alternatively or in addition, the stationary and mobile wireless interfaces may be configured for radio communication, e.g., a short-distance high-data-rate wireless communications or narrow-gap radio transmission. The radio communication may be implemented according to at least one of the Wireless Gigabit Alliance or IEEE 802.11ad, Wireless USB defined by the WiMedia Alliance, IEEE 802.11ac orWi-Fi, and millimeter-wave point-to-point communication. The radio communication may be directive, e.g., using beamforming. The millimeter-wave point-to-point communication may be implemented according to A. Ariffin et al., "The first millimeter-wave point-to-point wireless gigabit ethernet communication system at TMR&D", WSEAS Transactions on Communications.

As to a further aspect, a vehicle comprising the mobile device according to any embodiment of the second aspect is provided. The vehicle may be a truck or a bus.

As to a still further aspect, a road is provided. The road comprises a plurality of stationary devices according to any embodiment of the first aspect at or under a surface of at least one lane of the road. The backhaul interfaces of the plurality of stationary devices may be connected along the road, e.g., connected to a common data bus.

Mobility information announcing the arrival of a vehicle may be propagated through the connected backhaul interfaces. The wireless exchange of data units (DUs) between a mobile device located in the vehicle driving on the road and a respective one of the stationary devices may be triggered and/or scheduled by or based on the mobility information.

The mobility information may, alternatively or in addition (e.g., in parts), be communicated through a cellular telecommunications network from the vehicle to the stationary device. The vehicle may determine the mobility information by means of a satellite positioning system and/or measuring its velocity.

A first stationary device of the stationary devices may be configured to receive, through the wireless interface of the first stationary device, the at least one DU from a transmitting vehicle passing over the first stationary device. The first stationary device may be further configured to forward the at least one DU through the backhaul interface of the first stationary device to a second stationary device of the stationary devices. The second stationary device may be configured to receive the at least one DU through the backhaul interface of the second stationary device and to transmit, through the wireless interface of the second stationary device, the at least one DU to a receiving vehicle passing over the second stationary device.

### Brief Description of the Drawings

Further details of embodiments of the technique are described with reference to the enclosed drawings, wherein:
- Fig. 1A: schematically illustrates a first embodiment of a stationary device for wirelessly ex-changing data;
- Fig. 1B: schematically illustrates a second embodiment of a stationary device for wirelessly exchanging data;
- Fig. 2: schematically illustrates an embodiment of a mobile device for wirelessly exchanging data;
- Fig. 3: schematically illustrates a horizontal cross-sectional view of embodiments of the devices of Figs. 1 and 2; and
- Fig. 4: schematically illustrates a perspective view of an embodiment of a system comprising a plurality of devices of Fig. 1.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments may be implemented using radio communication for the wireless exchange of data, particularly according to the standard IEEE 802.11ad for Wireless Gigabit, the technique may also be implemented using any other technology for radio communication or optical communication, particularly according to the Third Generation Partnership Project (3GPP) or the standard family IEEE 802.11 for Wireless Local Area Networks (WLAN, also: Wi-Fi).

Moreover, those skilled in the art will appreciate that the functions, steps and units explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with devices, the invention may also be embodied by corresponding methods and/or in a computer program product as well as in a system comprising at least one computer processor and memory coupled to the at least one processor, wherein the memory is encoded with one or more programs that may perform the functions and steps or implement the units disclosed herein.

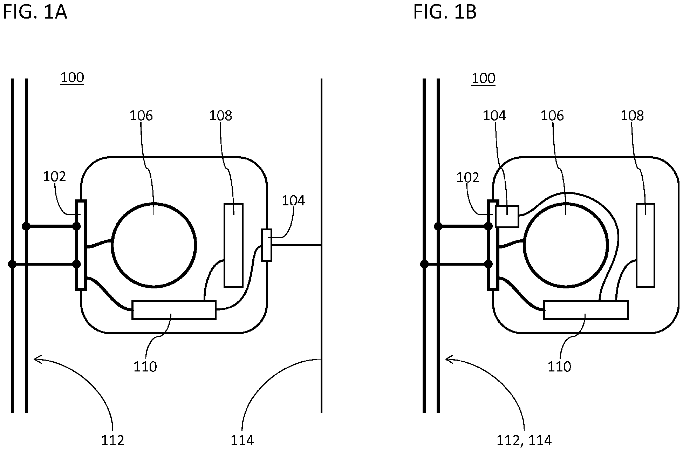

Fig. 1A schematically illustrates a first embodiment of a stationary device for wirelessly exchanging data, which device is generically referred to by reference sign 100. The stationary device 100 is located or locatable at or below a surface of a road for wirelessly exchanging data with a vehicle driving on the road.

The first embodiment of the stationary device 100 comprises a power supply 102 and a backhaul interface 104 configured to receive mobility information of the vehicle. The stationary device 100 further comprises an inductive charging unit 106 configured to inductively charge the vehicle using power supplied by the power supply 102. The stationary device 100 further comprises a wireless interface 108 configured to wirelessly exchange at least one data unit (DU) with the vehicle. The at least one DU comprises the data. The stationary device 100 may further comprise a scheduler 110 configured to schedule, based on the received mobility information, the wireless exchange of the at least one DU comprising the data. The at least one DU may comprise user data or data that is not controlling the inductive charging.

The technique may be implemented in combination with any technology for charging electrically driven vehicles through inductive charging plates (i.e., embodiments of the inductive charging unit 106) in the road. With the advent of inductive charging, a denser and denser infrastructure of inductive charging plates is deployed on the road network. The document WO 2016/037045 A1 describes a system for resonant induction wireless charging. For dynamically charging a vehicle driving along a road, vehicle-to-ground and ground-to-vehicle communications are used to transfer discrete, high-speed, highly discriminatory and reliable data as a requirement for commanding and controlling the charging system.

The stationary device 100 may further comprise a scheduler 110 configured to schedule, based on the received mobility information, the wireless exchange of the at least one protocol data unit (DU) comprising the data. The at least one DU may comprise user data or data that is not controlling the inductive charging. The wireless interface 108 is controlled by the scheduler to exchange the at least one DU as scheduled by the scheduler 110.

The first embodiment may comprise or use a dedicated line for the backhaul interface, e.g., for the reception of the mobility data. The first embodiment of the stationary device 100, as schematically illustrated in Fig. 1A, is connected or connectable to both a power-line cable 112 and a data line 114. More specifically, the power supply 102 is connected or connectable to the power-line cable 112. The backhaul interface 104 is connected to the data line 114.

At least one of the power-line cable 112 and the data line 114 may be located underground.

Fig. 1B schematically illustrates a second embodiment of the stationary device 100, which may be located or locatable at or below a surface of a road for wirelessly exchanging data with a vehicle driving on the road. Like reference signs of the first and second embodiments may indicate equivalent and/or exchangeable features.

The second embodiment may comprise or use the power-line cable 112 as the data line 114. Preferably, no dedicated data line for the backhaul interface 104 is necessary. For example, data is sent from the backhaul interface 104 and/or received from the backhaul interface 104 using power-line communication (PLC). The backhaul interface 104 comprises a PLC modulator for sending the data and/or a PLC demodulator for receiving the data. The backhaul interface 104 may be collocated with or integrated in the power supply 102.

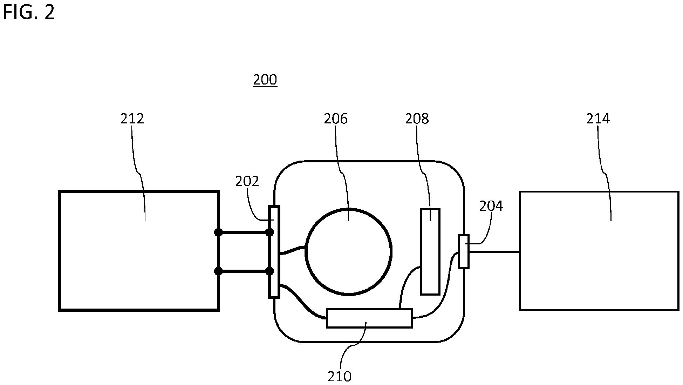

Fig. 2 schematically illustrates an embodiment of a mobile device 200 for wirelessly exchanging data, which device is generically referred to by reference sign 200. The mobile device 200 is located or locatable in a vehicle for wirelessly exchanging data with a stationary device, e.g., an embodiment of the stationary device 100, located at or below a surface of a road while driving on the road. The mobile device 200 comprises a mobile power supply 202 connected or connectable to a mobile power source 212, e.g., at least one of a rechargeable battery, a fuel cell, a solar cell, and an electric generator.

The vehicle and/or the mobile device 200 comprise at least one of the localization units 204 and 206 configured to provide mobility information of the vehicle to a scheduler, e.g., the scheduler 110 of the stationary device 100. The localization unit 204 may be a satellite-positioning receiver, a cellular terminal (e.g., a user equipment, UE, according to the Third Generation Partnership Project, 3GPP), and/or a data interface connected or connectable to an onboard computer or to such a satellite-positioning receiver or cellular terminal 214.

Alternatively or in addition, the location unit 206 may be a mobile inductive charging unit configured to receive electrical power induced by an embodiment of the stationary inductive charging unit 106. The inductive coupling between the units 106 and 206 may be indicative of the mobility information (e.g., location and/or velocity) of the vehicle to the embodiment of the stationary inductive charging unit 106, which forwards the location to another embodiment of the device 100 and/or the stationary inductive charging unit 106 prior to the vehicle passing the other embodiment of the device 100 and/or the stationary inductive charging unit 106.

The mobile device 200 further comprises a wireless interface 208 configured to wirelessly exchange the at least one data unit (DU) comprising the data with the stationary device 100. The mobile device 200 further comprises a radio unit 210 configured to receive scheduling information from the scheduler 110. The scheduling information may be indicative of at least one DU comprising the data.

The wireless interface 208 is controlled by the radio unit 210 to wirelessly exchange the at least one DU with the stationary device 100, as scheduled according to the scheduling information. The scheduling information may comprise a scheduling grant for the transmission of one or more DUs to the stationary device 100 and a scheduling assignment for the reception of one or more DUs from the stationary device 100.

The stationary device 100 may forward the data received from the vehicle to a data network and/or one or more servers, e.g., to the Internet, using the data line 114, preferably the PLC over the power-line cable 112. Such data may be received from a plurality of vehicles, e.g., each comprising an embodiment of the mobile device 200. The data received from the plurality of vehicles may be collected, e.g., by one or more servers connected to the data line 114, the data network, and/or the Internet. The collected data may be referred to as big data.

Use cases for the technique include application examples of big data. The data received by means of embodiments of the devices 100 from vehicles embodying the device 200 enables monitoring and/or management of a fleet of the vehicles and/or constantly monitoring a quality of produced vehicles. The amount of the collected data may be rather large, and a premise of the technical field of big data analysis is that the larger the amount of collected data, the better the results.

For constantly connected terminals or constantly connected vehicles (such as trains, e.g., using the German "Linienzugbeeinflussung" or LZB), the transmission of data from the terminal or the vehicle is less problematic, since they are at known or predictable locations and/or well connected through cost efficient (e.g., cellular or LZB) communications means. In contrast, motor vehicles can reach any place, including remote places and/or places not covered by a cellular telecommunications network or radio access network (RAN), e.g., 3GPP Long Term Evolution (LTE) or 3GPP New Radio (NR). This communication challenge (which could be conventionally resolved by satellite communication) poses a conflict between the amount of the collected data and the costs for receiving the data.

The technique enables exchanging (e.g., collecting) large amounts of data with a plurality of individually driven or autonomously driving vehicles at low costs and high efficiency. Furthermore, the short-range (e.g., near-field) radio communication between the wireless interfaces 108 and 208 enables frequency reuse and reduces interference and undesired electromagnetic emission to the environment.

The exchanged data may relate to or include push notifications, acknowledgments, verifications, status reports, logistics orders, destination information, and traffic updates or any data that is time-critical. The data may include any data with a quality of service (QoS) requirement (e.g., as to latency and/or reliability) below real-time data.

The technique can be efficiently implemented in conjunction with any technique for charging electrical vehicles driving on a road (also referred to as dynamically charging) through inductive charging plates (e.g., comprising the stationary inductive charging unit 106) collocated with or implementing the device 100.

The technique may be cost-effectively deployed alongside with a dynamically charging infrastructure. The same mobility information of individual vehicles may be used by both the charging infrastructure and the wireless interface for scheduling an induction field (i.e., a field for inductive charging) and scheduling the DU (i.e., transmitting or receiving the DU), respectively.

The technique may be applied over an increasingly dense infrastructure of inductive charging plates on the (e.g., current) road network. The technique may be operational in tunnels not covered by satellite links and cost-effective in remote areas not covered by cellular networks. Furthermore, the technique may provide a consistent pair of wireless interfaces 108 and 208 on different roads and/or in different countries.

In any embodiment of the device 100, the data line 114 may be implemented using PLC, which enables the communication of data through an electrical network, particularly through the power-line cable 112. By combining inductive charging plates (e.g., comprising the stationary inductive charging unit 106) with the device 100 implemented using PLC, the wireless interface 108 functions as a network entry (e.g., an ingress point for uplink data or a radio access point for the vehicle). Embodiments can enable exchanging (e.g., transmitting) data loads collected at a plurality of vehicles.

The stationary device 100 may be embodied by any radio communication apparatus that is coupled or configured for coupling with one or more inductive charging plates (i.e., the stationary inductive charging units 106). By design, inductive charging requires the mobile inductive charging unit 206 (i.e., the vehicle charging part) to be placed close to or to come close to the stationary inductive charging unit 106 (i.e., the road charging infrastructure).

A distance between the stationary inductive charging unit 106 and the mobile inductive charging unit 206 during the radio communication may be less than a lateral dimension of the stationary inductive charging unit 106 and/or the mobile inductive charging unit 206. The small distance between the units 106 and 206 during the radio communication can increase a signal-to-noise ratio and/or allow frequency reuse, e.g., between neighboring (or next-to-neighboring) embodiments of the device 100 along the road.

The combination of inductive charging and scheduled radio communication along the road offers a radio channel (e.g., with significant throughput) for a short term and/or reliable radio connections. The radio channel may comprise a multiple-input multiple-output (MIMO) channel. Once the data is transmitted from the mobile device 200 (i.e., from the vehicle) to the stationary device 100, the stationary device 100 is in charge of the transmission of the data through PLC or any available communications infrastructure. Thus, the stationary device 100 acts as a relay for the exchanged data or as a router connecting a short-range Radio Access Network (RAN).

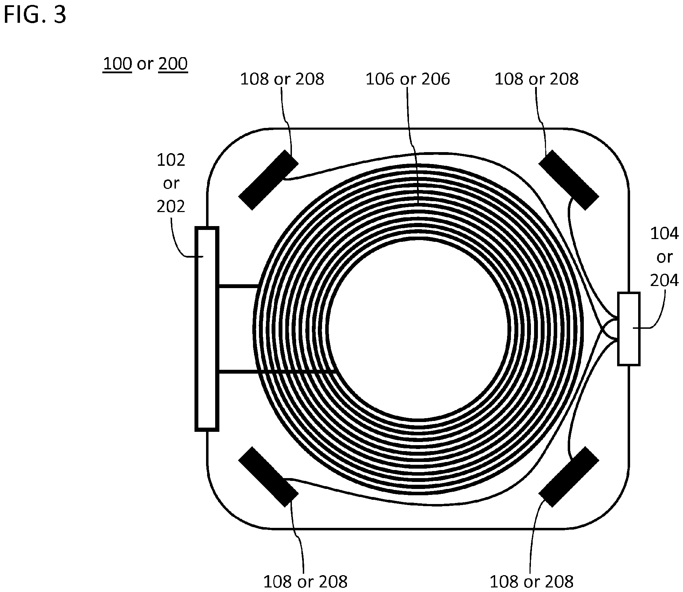

Fig. 3 schematically illustrates a horizontal cross-sectional view of an embodiment of the stationary device 100 or the mobile device 200. Features located at reference signs of the form 1xy and 2xy may be implemented in any embodiment of the stationary device 100 and the mobile device 200, respectively. The wireless interfaces 108 and 208 may comprise at least one pair of orthogonally polarized antennas, e.g., for a MIMO radio channel between the devices 100 and 200 comprising two or more spatial streams.

Both vehicles (i.e., embodiments of the device 200) and communication infrastructure (i.e., embodiments of the device 100) benefit from an a *priori* knowledge of the route of the vehicle embodying the device 200, e.g., as indicated by the mobility information, and an a *priori* knowledge of the locations of the inductive charging plates embodying the device 100, e.g., as indicated by maps and navigation data. The devices 100 and 200 are communications partners that schedule (i.e., prepare) a high data throughput transmission based on the mobility information prior to the mobile device 200 passing over the stationary device 100. The scheduler 110 schedules the transmission and reception for the time interval when the mobile device 200 passes over the stationary device 100. For example, the vehicle embodying the mobile device 200, particularly the radio unit 210, prepares the at least one DU comprising the data to be transmitted based on the positions or locations of the charging plates, i.e., embodiments of the stationary device 100, along the road.

The wireless exchange of data may comprise at least one of an uplink and a downlink. For the uplink, the mobile device 200 may function as a transmitter, and the stationary device 100 may function as a receiver. For the downlink, the stationary device 100 may function as a transmitter, and the mobile device 200 may function as a receiver.

Responsive to scheduling information, e.g., provided by the scheduler 110, the transmitter, e.g., the radio unit 210, prepares the at least one DU. The data to be exchanged may be combined, compressed and/or divided (also: split) into the at least one DU. For example, if the two next available plates are rather close from one another, it is possible to keep some amount of the data for the transmission after the next one, e.g., in order to maximize transmission efficiency and/or reliability. The at least one DU may correspond to a protocol data unit (PDU) according to a radio communication protocol.

The communication between the devices 100 and 200 may benefit from the existing inductive charging infrastructure by including the wireless interface 108 in the inductive charging infrastructure. Indeed, the network topology is known and the inductive charging plates, i.e., the inductive charging units 106, are connected to the power-line infrastructure, i.e., the power-line cable 112, for instance enabling power-line communications (PLCs).

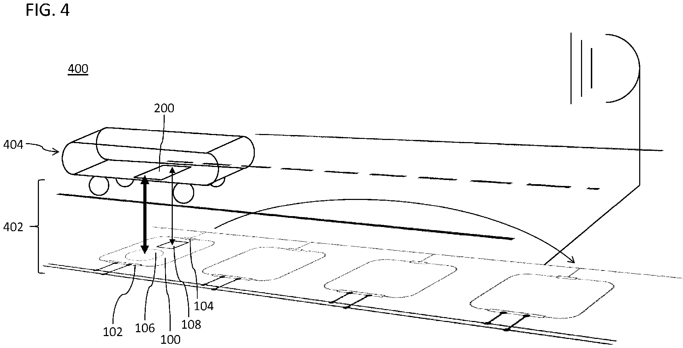

Fig. 4 schematically illustrates a perspective view of an embodiment of a system 400 comprising a plurality of devices 100 arranged (e.g., at equal distance) along a road 402 or a lane (e.g., of the road 402). The stationary devices 100 are configured for mutual data communication by means of the data line 114.

As schematically illustrated in Fig. 4, a first embodiment of the stationary device 100, which provides inductive charging to a vehicle 404 comprising an embodiment of the mobile device 200, reports at least one of
(a) a time of the vehicle 404 passing the first embodiment of the stationary device 100; and
(b) a velocity of the vehicle 404 (e.g., when passing the first embodiment of the stationary device 100)
to a second embodiment of the stationary device 100, which is located further along the road 402 in the direction of the velocity of the vehicle 404. The report from the first embodiment of the stationary device 100 to the second embodiment of the stationary device 100 is an example of the mobility information.

Alternatively or in addition, the data line 114 may provide data connectivity with at least one of a server, a data network, the Internet or a gateway to the Internet. The data connectivity may comprise a backhaul link. The backhaul link may be a microwave link, e.g., as is schematically depicted at the right-hand side of Fig. 4.

Same or another embodiment of the system 400 comprises at least one of a vehicular communications network, a stationary communications network (e.g., through the backhaul link), and one or more embodiments of the stationary device 100. The stationary devices 100 may be implemented by any radio communication devices. The stationary devices 100 may be added to an inductive charging infrastructure. Preferably, one stationary devices 100 is implemented at each of the inductive charging plates of the inductive charging infrastructure, i.e., at the sites of the stationary plates (also: pads or points) for inductive charging along the road 402.

The vehicular network may comprise one or more vehicles 404 and/or one or more backend servers. The vehicular communications network may be configured for vehicle-to-everything (V2X) communications, e.g., vehicle-to-infrastructure (V2I) vehicle-to-vehicle (V2V) communications. The vehicular communications network may be compatible with at least one of an intelligent transportation system (ITS), a standard of the standard family IEEE 802.11 (also: Wi-Fi), and a standard of the standard family of the Third Generation Partnership Project (3GPP), e.g., 3GPP Long Term Evolution (LTE) or 3GPP New Radio (NR).

The stationary device 100 may serve as an interface between the two networks, i.e., between the vehicular communications network and the stationary communications network. Each stationary device 100 comprises at least one scheduler 110 that prepares the at least one DU comprising the data to be received or transmitted and/or controls the reception or transmission using mobility predictions based on the mobility information. The scheduler may be an entity or agent implemented by means of algorithms and/or a link layer of a communications protocol.

The stationary communications network may comprise at least one of a power-line network based on PLC, one or more microwave links, and a core network for mobile telecommunications (e.g., for mobile telephony, such as an evolved packet core, EPC, according to the 3GPP).

The technique may be implemented as an extension of an existing network, which is referred to as extended network. Alternatively or in addition, the technique may enable additional applications.

A first implementation of the technique may extend or, e.g., partially, replace existing V2V and/or V2X communications. A first application of the technique includes V2V and/or V2X communication using embodiments of the devices 100 and 200, e.g., through the system 400 or the extended network. The data exchanged by the first implementation may comprise non-time critical information. A transmitting vehicle 404 uses a first embodiment of the mobile device 200 to transmit a message to a first embodiment of the stationary device 100, which may also be referred to as dropping a message at the corresponding inductive charging point. The message is relayed by means of the data line 114 (e.g., using PLC over the cable 112) to a second embodiment of the stationary device 100, which will be passed by the at least one receiving vehicle 404 according to the mobility information. The second embodiment of the stationary device 100 may be the next passing charging plate of the at least one receiving vehicle 404. The second embodiment of the stationary device 100 transmits the message to a second embodiment of the mobile device 200 in the receiving vehicle, which may also be referred to as catching the message at passage.

A second implementation of the technique, which may be combined with the first implementation, enables at least one value-added application. Vehicles 404 of a given fleet have a certain (e.g., large) capacity of data storage and processing resources. Such resources are designed to provide a performance that is sufficient for the data storage and/or processing peaks of onboard applications, which means that such resources are not efficiently used on average by the onboard applications. Conventionally, a reuse or sharing of such resources for non-onboard applications (e.g., tasks not performed in the vehicle and/or not related to the vehicle) is not possible. Even if the vehicle is connected with a back-end by any existing means of communications, it is not possible to realize efficient reuse and/or sharing of available fleet resources due to the unreliable existing wireless link. The second implementation of the technique provides highly reliable, e.g., periodic radio connections at known and/or predictable times and positions. For a sufficient number of vehicles 404 performing the second implementation of the technique (i.e., providing their computational and/or storage resource through an embodiment of the device 200), it is possible to calculate how many vehicles 404 reliably share their resources at any point of time. Moreover, big data exchange and efficient reuse of resources of the vehicles 404 enables a range of cloud-based services and applications, which are not possible with current wireless communications.

Below table summaries categories of wireless data exchange (i.e., wireless data communication).

| | Low-latency or time-critical data exchange | High-latency or not time-critical data exchange |
|---|---|---|
| Mobile Application | Mobile Broadband (MBB) | Embodiments of the Technique |
| Stationary Application | Machine-Type Communication (MTC) | Narrowband Internet of Things (NB-loT) |

While embodiments of the technique may also be implemented for MBB, MTC and/or NB-loT, any of the embodiments described herein may be preferably applied for exchanging data that is not time-critical and includes a mobile application (e.g., based on a road vehicle).

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

### List of Reference Signs

- 100: Stationary Device
- 102: Power Supply
- 104: Backhaul Interface
- 106: Stationary Inductive Charging Unit
- 108: Wireless Interface at Stationary Device
- 110: Scheduler
- 112: Power-Line Cable
- 114: Data Line
- 200: Mobile Device
- 202: Mobile Power Supply
- 204: Localization Unit based on express mobility information
- 206: Localization Unit based on induction
- 208: Wireless Interface at Mobile Device
- 210: Radio Unit
- 212: Mobile Power Source, e.g., Battery
- 214: Cellular Terminal and/or Onboard Computer
- 400: System
- 402: Road
- 404: Vehicle

## Claims

1. A stationary device (100) locatable at or below a surface of a road (402) for wirelessly exchanging data with a vehicle (404) comprising a mobile device (200) for wirelessly exchanging data with the stationary device (100) and driving on the road (402), the stationary device (100) comprising:
a backhaul interface (104) configured to receive mobility information of the vehicle (404) from the mobile device (200) of the vehicle (404);
a scheduler (110) configured to schedule, based on the mobility information, the wireless exchange of at least one data unit, DU, comprising the data; and
a wireless interface (108) configured to wirelessly exchange the at least one DU with the mobile device (200) of the vehicle (404) as scheduled by the scheduler (110).

2. The stationary device (100) of claim 1, wherein the wireless interface (108) is configured for a radio communication with the vehicle while the vehicle passes over the stationary device.

3. The stationary device (100) of claim 1 or 2, wherein the backhaul interface (104) is further configured to receive data to be wirelessly transmitted to the vehicle (404) in the wireless exchange of the at least one DU and/or to forward the data wirelessly received from the vehicle (404) in the wireless exchange of the at least one DU.

4. The stationary device (100) of any one of claims 1 to 3, wherein the scheduler (110) determines a time for the data exchange based on the mobility information, the determined time corresponding to the vehicle (404) passing over the stationary device (100).

5. The stationary device (100) of any one of claims 1 to 4, wherein the scheduler (110) determines, based on the mobility information, at least one of a size of the at least one DU, a number of the at least one DU, a modulation scheme for the at least one DU, a coding scheme for the at least one DU, and a medium access scheme for the wireless exchange of the at least one DU.

6. The stationary device (100) of any one of claims 1 to 5, wherein the stationary device (100) comprises or is co-located or co-locatable with:
an inductive charging unit (106) in the road (402).

7. The stationary device (100) of claim 6, further comprising a power supply (102) connected or connectable to a power supply line (112) of the inductive charging unit (106).

8. The stationary device (100) of claim 6 or 7, wherein the backhaul interface (104) comprises a power line modem coupled to the power supply line (112) of the inductive charging unit (106).

9. The stationary device (100) of any one of claims 6 to 8, wherein the wireless interface (108) and the inductive charging unit (106) are configured to simultaneously exchange the data and energy, respectively, based on the mobility information.

10. A mobile device (200) locatable in a vehicle (404) for wirelessly exchanging data with a stationary device (100) located at or below a surface of a road (402) while driving on the road (402), the mobile device (200) comprising:
a localization unit (204; 206) configured to provide mobility information of the vehicle (404) to a scheduler (110) of the stationary device (100);
a radio unit (210) configured to receive scheduling information from the scheduler (110), the scheduling information being indicative of at least one data unit, DU, comprising the data; and
a wireless interface (208) configured to wirelessly exchange the at least one DU with the stationary device (100) as scheduled according to the scheduling information.

11. The mobile device (200) of claim 10, further comprising an inductive charging unit (206) configured to receive energy from an inductive charging unit (106) co-located with the stationary device (100) and to supply the received energy to a traction battery (212) of the vehicle (404).

12. A vehicle (404) comprising the mobile device (200) according to claim 10 or 11.

13. A road (402) comprising under a surface of at least one lane a plurality of stationary devices (100) according to any one of the claims 1 to 9, wherein the backhaul interfaces (104) of the plurality of stationary devices (100) are connected along the road (402).

14. The road (402) of claim 13, wherein mobility information announcing the arrival of a vehicle (404) is propagated at least through the connected backhaul interfaces (104), and wherein the wireless exchange of data units, DUs, between a mobile device (200) located in the vehicle (404) driving on the road (402) and a respective one of the stationary devices (100) is triggered by the mobility information.

15. The road (402) of claim 13 or 14, wherein a first stationary device (100) of the stationary devices (100) is configured to receive, through the wireless interface (108) of the first stationary device (100), the at least one DU from a transmitting vehicle (404) passing over the first stationary device (100) and to forward the at least one DU through the backhaul interface (104) of the first stationary device (100) to a second stationary device (100) of the stationary devices (100), and wherein the second stationary device (100) is configured to receive the at least one DU through the backhaul interface (104) of the second stationary device (100) and to transmit, through the wireless interface (108) of the second stationary device (100), the at least one DU to a receiving vehicle (404) passing over the second stationary device (100).

## Patentansprüche

1. Stationäre Vorrichtung (100), die an oder unter einer Oberfläche einer Straße (402) zum drahtlosen Austauschen von Daten mit einem Fahrzeug (404) anordenbar ist, das eine mobile Vorrichtung (200) zum drahtlosen Austauschen von Daten mit der stationären Vorrichtung (100) umfasst und auf der Straße (402) fährt, wobei die stationäre Vorrichtung (100) umfasst:
eine Backhaul-Schnittstelle (104), die ausgelegt ist, Mobilitätsinformation des Fahrzeugs (404) von der mobilen Vorrichtung (200) des Fahrzeugs (404) zu empfangen;
eine Planungsvorrichtung (110), die ausgelegt ist, basierend auf der Mobilitätsinformation den drahtlosen Austausch mindestens einer Dateneinheit, DU, zu planen, die die Daten umfasst; und
eine drahtlose Schnittstelle (108), die ausgelegt ist, die mindestens eine DU mit der mobilen Vorrichtung (200) des Fahrzeugs (404) wie durch die Planungsvorrichtung (110) geplant drahtlos auszutauschen.

2. Stationäre Vorrichtung (100) nach Anspruch 1, wobei die drahtlose Schnittstelle (108) für eine Funkkommunikation mit dem Fahrzeug ausgelegt ist, während das Fahrzeug über die stationäre Vorrichtung passiert.

3. Stationäre Vorrichtung (100) nach Anspruch 1 oder 2, wobei die Backhaul-Schnittstelle (104) ferner ausgelegt ist, drahtlos an das Fahrzeug (404) zu übertragende Daten bei dem drahtlosen Austausch der mindestens einen DU zu empfangen und/oder die von dem Fahrzeug (404) drahtlos empfangenen Daten bei dem drahtlosen Austausch der mindestens einen DU weiterzuleiten.

4. Stationäre Vorrichtung (100) nach einem der Ansprüche 1 bis 3, wobei die Planungsvorrichtung (110) eine Zeit für den Datenaustausch basierend auf der Mobilitätsinformation bestimmt, wobei die bestimmte Zeit dem Passieren des Fahrzeugs (404) über die stationäre Vorrichtung (100) entspricht.

5. Stationäre Vorrichtung (100) nach einem der Ansprüche 1 bis 4, wobei die Planungsvorrichtung (110) basierend auf der Mobilitätsinformation mindestens eines einer Größe der mindestens einen DU, einer Anzahl der mindestens einen DU, eines Modulationsschemas für die mindestens eine DU, eines Codierungsschemas für die mindestens eine DU und eines Mediumzugriffsschemas für den drahtlosen Austausch der mindestens einen DU bestimmt.

6. Stationäre Vorrichtung (100) nach einem der Ansprüche 1 bis 5, wobei die stationäre Vorrichtung (100) Folgendes umfasst oder damit gemeinsam angeordnet oder gemeinsam anordenbar ist:
eine induktive Ladeeinheit (106) in der Straße (402).

7. Stationäre Vorrichtung (100) nach Anspruch 6, ferner umfassend eine Stromversorgung (102), die mit einer Stromversorgungsleitung (112) der induktiven Ladeeinheit (106) verbunden oder verbindbar ist.

8. Stationäre Vorrichtung (100) nach Anspruch 6 oder 7, wobei die Backhaul-Schnittstelle (104) ein Stromleitungsmodem umfasst, das mit der Stromversorgungsleitung (112) der induktiven Ladeeinheit (106) gekoppelt ist.

9. Stationäre Vorrichtung (100) nach einem der Ansprüche 6 bis 8, wobei die drahtlose Schnittstelle (108) und die induktive Ladeeinheit (106) ausgelegt sind, die Daten bzw. Energie basierend auf der Mobilitätsinformation gleichzeitig auszutauschen.

10. Mobile Vorrichtung (200), die in einem Fahrzeug (404) zum drahtlosen Austauschen von Daten mit einer stationären Vorrichtung (100), die an oder unter einer Oberfläche einer Straße (402) angeordnet ist, bei Fahren auf der Straße (402) anordenbar ist,
wobei die mobile Vorrichtung (200) umfasst:
eine Standortbestimmungseinheit (204; 206), die ausgelegt ist, Mobilitätsinformation des Fahrzeugs (404) an eine Planungsvorrichtung (110) der stationären Vorrichtung (100) bereitzustellen;
eine Funkeinheit (210), die ausgelegt ist, Planungsinformation von der Planungsvorrichtung (110) zu empfangen, wobei die Planungsinformation mindestens eine Dateneinheit, DU, anzeigt, die die Daten umfasst; und
eine drahtlose Schnittstelle (208), die ausgelegt ist, die mindestens eine DU mit der stationären Vorrichtung (100) wie durch die Planungsinformation geplant drahtlos auszutauschen.

11. Mobile Vorrichtung (200) nach Anspruch 10, ferner umfassend eine induktive Ladeeinheit (206), die ausgelegt ist, Energie von einer induktiven Ladeeinheit (106) zu empfangen, die mit der stationären Vorrichtung (100) gemeinsam angeordnet ist, und die empfangene Energie zu einer Traktionsbatterie (212) des Fahrzeugs (404) zu liefern.

12. Fahrzeug (404), umfassend die mobile Vorrichtung (200) nach Anspruch 10 oder 11.

13. Straße (402), umfassend, unter einer Oberfläche mindestens einer Spur, einer Mehrzahl von stationären Vorrichtungen (100) nach einem der Ansprüche 1 bis 9, wobei die Backhaul-Schnittstellen (104) der Mehrzahl von stationären Vorrichtungen (100) entlang der Straße (402) verbunden sind.

14. Straße (402) nach Anspruch 13, wobei Mobilitätsinformation, die die Ankunft eines Fahrzeugs (404) anzeigt, mindestens über die verbundenen Backhaul-Schnittstellen (104) verbreitet wird, und wobei der drahtlose Austausch von Dateneinheiten, DUs, zwischen einer mobilen Vorrichtung (200), die in dem Fahrzeug (404) angeordnet ist, das auf der Straße (402) fährt, und einer jeweiligen der stationären Vorrichtungen (100) durch die Mobilitätsinformation ausgelöst wird.

15. Straße (402) nach Anspruch 13 oder 14, wobei eine erste stationäre Vorrichtung (100) der stationären Vorrichtungen (100) ausgelegt ist, über die drahtlose Schnittstelle (108) der ersten stationären Vorrichtung (100) die mindestens eine DU von einem übertragenden Fahrzeug (404) zu empfangen, das über die erste stationäre Vorrichtung (100) passiert, und die mindestens eine DU über die Backhaul-Schnittstelle (104) der ersten stationären Vorrichtung (100) an eine zweite stationäre Vorrichtung (100) der stationären Vorrichtungen (100) weiterzuleiten, und wobei die zweite stationäre Vorrichtung (100) ausgelegt ist, die mindestens eine DU über die Backhaul-Schnittstelle (104) der zweiten stationären Vorrichtung (100) zu empfangen und über die drahtlose Schnittstelle (108) der zweiten stationären Vorrichtung (100) die mindestens eine DU an ein empfangendes Fahrzeug (404) zu übertragen, das über die zweite stationäre Vorrichtung (100) passiert.

## Revendications

1. Dispositif stationnaire (100) positionnable sur une surface, ou en dessous de celle-ci, d'une route (402), pour échanger sans fil des données avec un véhicule (404) comprenant un dispositif mobile (200) pour échanger sans fil des données avec le dispositif stationnaire (100) et conduisant sur la route (402), le dispositif stationnaire (100) comprenant :
une interface de réseau terrestre (104) configurée pour recevoir des informations de mobilité du véhicule (404) à partir du dispositif mobile (200) du véhicule (404) ;
un ordonnanceur (110) configuré pour ordonnancer, sur la base des informations de mobilité, l'échange sans fil d'au moins une unité de données, DU, comprenant les données ; et
une interface sans fil (108) configurée pour échanger sans fil l'au moins une DU avec le dispositif mobile (200) du véhicule (404) conformément à l'ordonnancement par l'ordonnanceur (110).

2. Dispositif stationnaire (100) selon la revendication 1, dans lequel l'interface sans fil (108) est configuré pour une communication radio avec le véhicule alors que le véhicule passe par-dessus le dispositif stationnaire.

3. Dispositif stationnaire (100) selon la revendication 1 ou 2, dans lequel l'interface de réseau terrestre (104) est en outre configurée pour recevoir des données, destinées à être transmises sans fil au véhicule (404) dans l'échange sans fil de l'au moins une DU, et/ou pour réacheminer les données reçues sans fil à partir du véhicule (404) dans l'échange sans fil de l'au moins une DU.

4. Dispositif stationnaire (100) selon l'une quelconque des revendications 1 à 3, dans lequel l'ordonnanceur (110) détermine un instant pour l'échange de données sur la base des informations de mobilité, l'instant déterminé correspondant au véhicule (404) passant par-dessus le dispositif stationnaire (100).

5. Dispositif stationnaire (100) selon l'une quelconque des revendications 1 à 4, dans lequel l'ordonnanceur (110) détermine, sur la base des informations de mobilité, au moins un d'une taille de l'au moins une DU, d'un nombre de l'au moins une DU, d'un mode de modulation pour l'au moins une DU, d'un mode de codage pour l'au moins une DU, et d'un mode d'accès au support pour l'échange sans fil de l'au moins une DU.

6. Dispositif stationnaire (100) selon l'une quelconque des revendications 1 à 5, dans lequel le dispositif stationnaire (100) comprend ou est co-positionné ou co-positionnable avec :
une unité de charge par induction (106) dans la route (402).

7. Dispositif stationnaire (100) selon la revendication 6, comprenant en outre une alimentation électrique (102) connectée ou connectable à une ligne d'alimentation électrique (112) de l'unité de charge par induction (106).

8. Dispositif stationnaire (100) selon la revendication 6 ou 7, dans lequel l'interface de réseau terrestre (104) comprend un modem de ligne électrique couplé à la ligne d'alimentation électrique (112) de l'unité de charge par induction (106).

9. Dispositif stationnaire (100) selon l'une quelconque des revendications 6 à 8, dans lequel l'interface sans fil (108) et l'unité de charge par induction (106) sont configurées pour simultanément échanger les données et de l'énergie, respectivement, sur la base des informations de mobilité.

10. Dispositif mobile (200) positionnable dans un véhicule (404) pour échanger sans fil des données avec un dispositif stationnaire (100) positionné sur une surface, ou en dessous de celle-ci, d'une route (402) lors de la conduite sur la route (402),
le dispositif mobile (200) comprenant :
une unité de localisation (204 ; 206) configurée pour fournir des informations de mobilité du véhicule (404) à un ordonnanceur (110) du dispositif stationnaire (100) ;
une unité radio (210) configurée pour recevoir des informations d'ordonnancement à partir de l'ordonnanceur (110), les informations d'ordonnancement étant indicatives d'au moins une unité de données, DU, comprenant les données ; et
une interface sans fil (208) configurée pour échanger sans fil l'au moins une DU avec le dispositif stationnaire (100) conformément à l'ordonnancement selon les informations d'ordonnancement.

11. Dispositif mobile (200) selon la revendication 10, comprenant en outre une unité de charge par induction (206) configurée pour recevoir de l'énergie à partir d'une unité de charge par induction (106) co-positionnée avec le dispositif stationnaire (100) et pour alimenter une batterie de traction (212) du véhicule (404) avec l'énergie reçue.

12. Véhicule (404), comprenant le dispositif mobile (200) selon la revendication 10 ou 11.

13. Route (402) comprenant, sous une surface d'au moins une voie, une pluralité de dispositifs stationnaires (100) selon l'une quelconque des revendications 1 à 9, dans laquelle les interfaces de réseau terrestre (104) de la pluralité de dispositifs stationnaires (100) sont connectées le long de la route (402).

14. Route (402) selon la revendication 13, dans laquelle des informations de mobilité annonçant l'arrivée d'un véhicule (404) sont propagées au moins par l'intermédiaire des interfaces de réseau terrestre connectées (104), et dans laquelle
l'échange sans fil d'unités de données, DUs, entre un dispositif mobile (200) positionné dans le véhicule (404) conduisant sur la route (402) et l'un respectif des dispositifs stationnaires (100) est déclenché par les informations de mobilité.

15. Route (402) selon la revendication 13 ou 14, dans laquelle un premier dispositif stationnaire (100) du dispositifs stationnaires (100) est configuré pour recevoir, par l'intermédiaire de l'interface sans fil (108) du premier dispositif stationnaire (100), l'au moins une DU à partir d'un véhicule transmetteur (404) passant par-dessus le premier dispositif stationnaire (100) et pour réacheminer l'au moins une DU par l'intermédiaire de l'interface de réseau terrestre (104) du premier dispositif stationnaire (100) jusqu'à un second dispositif stationnaire (100) des dispositifs stationnaires (100), et dans laquelle le second dispositif stationnaire (100) est configuré pour recevoir l'au moins une DU par l'intermédiaire de l'interface de réseau terrestre (104) du second dispositif stationnaire (100) et pour transmettre, par l'intermédiaire de l'interface sans fil (108) du second dispositif stationnaire (100), l'au moins une DU à un véhicule récepteur (404) passant par-dessus le second dispositif stationnaire (100).
